# EUROPÄISCHE PATENTSCHRIFT

(11) **EP 0 418 613 B1**
(45) Veröffentlichungstag und Bekanntmachung des Hinweises auf die Patenterteilung: **04.05.1994**
(21) Anmeldenummer: 90116717.1
(22) Anmeldetag: 31.08.1990
(51) Int. Cl.: A62D 3/00

(54) **Verfahren zur Entsorgung von im Rahmen der Asbestsanierung von baulichen Anlagen, aus diesen ausgebauten asbestfaserhaltigen Produkten, wie Spritzasbest od.dgl., und Entsorgungsgerät für die Durchführung des Verfahrens**
Process for the removal during asbestos decontamination of buildings made out of these detached, asbestos fibre containing products, such as sprayed asbestos etc., and removal apparatus for performing said process
Procédé pour enlever dans le cadre de la décontamination à cause d'amiante des constructions fabriquées des produits démontés contenant les fibres d'amiante comme amiante pulvérisé etcétéra, et dispositif d'enlèvement pour exécuter ce procédé

(30) Priorität: 22.09.1989 DE 3931686
(43) Veröffentlichungstag der Anmeldung: 27.03.1991
(73) Patentinhaber: INSTITUT FÜR BAUPHYSIK UND BAUCHEMIE, Dipl.-Ing. Horst Kempin, Beratende Ingenieure VBI, Baustofflabor GmbH, 22395 Hamburg (DE)
(72) Erfinder: Mathiszik, Dieter, D-2057 Reinbek (DE); Siebrecht, Helmut, Dipl.-Ing., D-2000 Hamburg 52 (DE)
(74) Vertreter: Richter, Werdermann & Gerbaulet

(56) Entgegenhaltungen:
- WO-A-91/00123
- US-A- 4 678 493
- CHEMICAL ABSTRACTS, Band 108, Nr. 9, 29. Februar 1988, Seite 394,Zusammenfassung Nr. 81424q, Columbus, Ohio, US;& JP-A-62 237 984 (MYOJO KOGYO K.K.) 17-10-1987

## Beschreibung

Die Erfindung betrifft ein Verfahren zur Entsorgung von im Rahmen der Asbestsanierung von baulichen Anlagen aus diesen ausgebauten, asbestfaserhaltigen Produkten, wie Spritzasbest od.dgl., bei dem die Asbestfasern in Anwesenheit eines Flußmittels durch Schmelzen bei gleichzeitiger Überführung in ungefährliche Strukturen aufgeschlossen werden, sowie ein Entsorgungsgerät für die Durchführung des Verfahrens und die Verwendung eines Schmelzaufschlusses in Anwesenheit eines Flußmittels zur Überführung der Asbestfasern in ungefährliche Metalloxide.

Im Rahmen der Asbestsanierung von baulichen Anlagen ist es bekannt, die aus den baulichen Anlagen ausgebauten Asbestprodukte, wie beispielsweise Spritzasbest, Asbestzement, Asbestzement-Dachplatten, Asbestzement-Tafeln, Asbestzement-Rohre und Asbestzement-Wellplatten wie folgt zu entsorgen:
1. Luftdichte Verpackung in Polyäthylenbeuteln mit späterer Ablagerung auf Sondermülldeponien. Nachteilig ist hierbei das große Volumen der zu entsorgenden Baustoffe, weiterhin bestehende Kontaminationsgefahr, da die Asbestfaserstruktur erhalten bleibt; große Beschädigungsgefahr während der Ablagerungszeit durch die geringe mechanische Belastbarkeit der Polyäthylenbeutel.
2. Einbinden der entsorgten Asbestfasern durch Vermengung mit Beton, Mörtel od.dgl. als Bindemittel. Hier ist ebenfalls nachteilig das große Volumen der zu entsorgenden Produkte. Durch die Vermengung mit Beton od.dgl. werden Produkte mit hohem Gewicht erhalten. Hieraus resultiert ein kostenaufwendiger Transport und in der Sondermülldeponieablagerung besteht eine verbleibende Restkontaminationsgefahr, da die Faserstruktur der Asbestbaustoffe erhalten bleibt.
3. Einschmelzverfahren durch Einbindung der entsorgten Asbestfaserbaustoffe in Glas. Hierbei ist nachteilig, daß ortsfeste Anlagen erforderlich sind, die nicht variabel unter Bezug auf die jeweilige Baustelle angeordnet werden können. Hinzu kommen hohe Kosten durch den erforderlichen großen Apparateaufwand und ferner hohe Energiekosten, da Temperaturen von mehr als 2000° C zum Einschmelzen erforderlich sind.

Durch die WO-A-9 100 123 (Priorität: 29.06.89; Veröffentlichungsdatum; 10.01.91) ist ein Verfahren zur mineralogischen Umwandlung von Asbest in ein asbestfreies Produkt bekannt, nach dem der Asbest mit einem Mineralbildner (Flußmittel) behandelt und der so behandelte Asbest durch Erhitzen in ein asbestfreies Produkt übergeführt wird, wobei ein Mineralbildner aus einer Gruppe ausgewählt ist, die aus einem wasserlöslichen Alkalimetallhydroxid, Alkalimetallborat und Alkalimetallsilikat oder der Mineralbildner aus Natriumborat oder Natriumsilikat besteht. Dabei wird eine vollständige Umwandlung des asbesthaltigen Ausgangsproduktes in das asbestfreie Endprodukt bei Anwendung eines derartigen Mineralbildners bei zwischen 538° C und 1538° C liegenden Temperaturen durchgeführt. Das Verfahren selbst wird vermittels einer Vorrichtung durchgeführt, die aus einer Zerkleinerungseinrichtung besteht, in der das asbesthaltige Produkt zerkleinert wird, um eine homogene Durchmischung mit dem in flüssiger Form zugeführten Mineralbildner zu erreichen. Der flüssige Mineralbildner wird über Einspritzdüsen dem zerkleinerten Ausgangsprodukt zugeführt. Über einen Schneckenförderer wird dann das mit dem Mineralbildner versetzte asbesthaltige Produkt bei gleichzeitiger gleichmäßiger Durchfeuchtung des asbesthaltigen Produktes mit dem flüssigen Mineralbildner einer Trockenkammer zugeführt, in der die im Produkt enthaltene Feuchtigkeit beseitigt wird. Das Erhitzen des Mischproduktes erfolgt dann in einer besonderen Wärmebehandlungskammer, der nach der Mineralienumwandlung das asbestfreie Endprodukt entnommen wird. Bei diesem Verfahren erfolgt jedoch keine Unterstützung des Schmelzaufschlusses durch irgendwie geeignete Zusätze. Außerdem muß die im Produkt enthaltene Feuchtigkeit durch einen zusätzlichen Energieaufwand, nämlich durch eine Vorbehandlung in einer Trockenkammer beseitigt werden, da die dem asbesthaltigen Ausgangsprodukt zugesetzten Mineralbildner nicht geeignet sind, aus einer Restfeuchte stammendes Wasser vorab zu binden, um den gesamten Aufschlußprozeß wirtschaftlicher durchführen zu können.

Aus Chemical Abstract, Band 108, Nr. 9, 29. Februar 1988, S. 394 Zusammenfassung Nr. 81424q, ist es bekannt, Abfallfeststoffe, die Asbest enthalten, durch Schmelzen und Verglasung zu beseitigen. Hiernach werden Abfallfeststoffe, die Asbest enthalten mit einem Flußmittel und einem Hilfsmittel gemischt. Das Gemisch wird dann in einem Schmelzofen mit einer bei 1100° C liegenden Temperatur erhitzt, um die Asbestfasern zu schmelzen und zu verglasen und sie in eine harmlose Kristallstruktur zu verändern, so daß das erhaltene Endprodukt asbestfrei ist. Als Flußmittel werden u.a. Alkalimetallsilikate, Alkalimetallcarbonate oder Alkalihydroxide und einem Anteil des geschmolzenen Zwischenproduktes und als Hilfsmittel BaCo₃, BaSO₄, NaNO₃, KNO₃, C, SnCl₂, Graphite oder Zn eingesetzt. Auch bei diesem Verfahren wird keine Beseitigung vorhandener Feuchte oder durch Restfeuchte erhaltenes Wasser vor dem Erhitzungsprozeß vorgenommen.

Der vorliegenden Erfindung liegt die Aufgabe zugrunde, ein Verfahren zur Entsorgung von Asbestfaserprodukten zu schaffen, welches wirtschaftlich ohne Anwendung hoher Temperaturen durchführbar ist, mit dem Endprodukte erhalten werden, die weder ein hohes Gewicht aufweisen, noch eine Kontaminationsgefahr bei Sondermülldeponieablagerungen darstellen, und das nicht ortsgebunden einsetzbar ist.

Diese Aufgabe wird durch die in dem Patentanspruch 1 angegebenen Verfahrensmaßnahmen gelöst.

Mit dem erfindungsgemäßen Verfahren ist ein Schmelzaufschluß der Asbestfasern bei Temperaturen von unterhalb 1000° C durchführbar. Im Rahmen dieses Verfahrens erfolgt eine Rückführung der entsorgten Asbestfasern in ungefährliche Metalloxide, wie Aluminiumoxid, Siliciumdioxid, Eisenoxid, Mangandioxid u.dgl..

Durch den Zusatz von Flußmitteln, wie z.B. Alkalisalze oder andere geeignete Flußmittel, wie diese als Zuschlagsstoffe in Schmelzverfahren zum Erleichtern des Schmelzens eingesetzt werden, zu den Asbestfaserprodukten bildet sich im Rahmen des Schmelzverfahrens eine eutektische Legierung, deren Schmelzpunkt erheblich unter dem Schmelzpunkt der Asbestfaserprodukte liegt, deren Schmelzpunkt oberhalb 2000° C liegt. Der Schmelzaufschluß wird durch die Zugabe einer Salzlösung unterstützt.

Unter Verwendung von Tiegelöfen od.dgl. im Zusammenhang mit den bekannten gas- oder ölbetriebenen Brennern erfolgt durch die Zugabe von Flußmitteln ein Schmelzaufschluß bei Temperaturen, die unterhalb 1000° C liegen.

Die Besonderheit des Verfahrens besteht darin, daß das nach einem Sanierungsprozeß mit Restfeuchte behaftete, Asbestfasern enthaltende Material mit einer Salzlösung durchtränkt, mechanisch von überschüssiger Feuchte befreit und anschließend die Asbestfasern in Anwesenheit eines Flußmittels, wie Alkalisalze od.dgl., durch Schmelzen bei Temperaturen unterhalb von 1000° C bei gleichzeitiger Überführung in ungefährliche Metalloxide aufgeschlossen werden. Hiernach wird das nach einem Sanierungsprozeß mit Restfeuchte behaftete Material mit einer Salzlösung durchtränkt, mechanisch von überschüssiger Feuchte befreit und anschließend thermisch behandelt. Eigenschaften und Zusammensetzung der Salzlösung richten sich nach dem zu behandelnden Material (Menge und Art des Bindemittels im Spritzasbest). Eingesetzt wird eine Salzlösung, die aus Soda (Natriumcarbonat; Decahydrat des Natriumcarbonats) und Borax (Natriumtetraborat - Na₂B₄O₇ . 10 H₂O) besteht. Das Salzverhältnis zwischen Soda/Borax beträgt vorzugsweise 1:3 bis 1:8. Bei einer Gesamtsalzkonzentration von 15 bis 30 Gewichts-%, wobei sich die Zahlenangaben auf wasserfreies Soda und Borax-Decahydrat beziehen. Die Zugabe der Salzlösung erfolgt vorzugsweise bei Temperaturen von 20° bis 50° C. Der Borax unterstützt dabei das Aufschließen der Asbestfasern. Daß Soda in der eingesetzten Salzlösung verwendet wird, hat den Vorteil, daß der Schmelzaufschluß unterstützt wird. Wird calcinierte Soda eingesetzt, so kann eine Bindung des aus der Restfeuchte stammenden Wassers erreicht werden. Auch das Decahydrat des Natriumcarbonats kann eingesetzt werden.

Bei der an dem Asbestfasern enthaltenden Material anhaftenden Restfeuchte handelt es sich um die aus dem üblichen Sanierungsprozeß resultierende Restfeuchte, und zwar wird schwachgebundenes Asbestmaterial, wie z.B. Spritzasbest, im Rahmen des Ausbaues in den baulichen Anlagen mit Wasser vernetzt oder aber auch durchtränkt, um zunächst eine örtliche Staub- und Faserbindung vorzunehmen. Bei dem Sanierungsprozeß handelt es sich um sanierte, bauliche Anlagen,wobei dann im Anschluß an den Sanierungsprozeß im Rahmen einer Entsorgung die Asbestfasern asbestfaserhaltiger Produkte aufgeschlossen werden. Im Zusammenhang mit der Anfeuchtung des Materials wird das Material mechanisch oder über Sauganlagen von der jeweiligen Bauteiloberfläche abgetragen. Das somit angefeuchtete oder durchfeuchtete, Asbestfasern enthaltende Material kommt dann in der nächsten Stufe der entsprechend vorgesehenen Entsorgung in den Bereich der angegebenen Asbestaufbereitung, und zwar mit variierendem Restfeuchtegehalt. Die Vernetzung des - wie vorgenannt - entsorgten Asbestmateriales mit der angegebenen Salzlösung erfolgt im Rahmen eines maschinell gesteuerten Mischprozesses, beispielsweise unter Verwendung eines Zwangsmischers. Dabei wird vorzugsweise in der Weise vorgegangen, daß maschinell eine Mischung zwischen Salzlösung und entsorgtem Asbestmaterial erfolgt, wobei vom Prinzip her ein Zwangsmischersystem zur Anwendung gelangen kann. Daran anschließend wird innerhalb des geschlossenen maschinellen Aufbereitungssystems eine Fortleitung der wie vorgenannt aufbereiteten, mit Salzlösung versetzten Asbestmaterialien durch Vorschaltung einer Fördereinrichtung, wie beispielsweise Förderband, vorgenommen. Im Rahmen dieses Zwischentransportes in Richtung zum daran anschließenden thermischen Schmelzaufschluß wird das im Asbestmaterial befindliche freie Wasser mechanisch aus dem Wassergefüge entfernt, z.B. durch einen zwischengeschalteten Verdichtungsprozeß, der durch Pressen des Fasergefüges analog zum Ausdrücken eines Schwammes freies Wasser abfließen läßt. Nachfolgend wird das somit vorbereitete Asbestmaterial dem Schmelzbereich des geschlossenen Produktionsprozesses zugeführt, um bei einer Temperatur von <1000°C den voranstehend genannten Schmelzaufschluß durchführen zu können.

Mit dem erfindungsgemäßen Verfahren ergeben sich folgende Vorteile:
Es können kleinformatige Entsorgungseinheiten eingesetzt werden, die variabel entsprechend der Baustellen fahrbar analog zu üblichen Baustelleneinrichtungen ausgebildet sind, wodurch eine erhebliche Kostenreduzierung für die Maschineninvestionen sowie auch für den notwendigen Transport der entsorgten Asbestbaustoffe sich ergibt.

Es ist eine direkte Entsorgung der in den baulichen Anlagen ausgebauten Asbestprodukte über die überlicherweise bereits eingesetzten Außenluftstaubsauger im geschlossenen Kreislauf direkt in ein nachstehend noch näher beschriebenes Entsorgungsgerät möglich. Dadurch ergibt sich keine zusätzliche Gefahr der Kontamination der Außenluft.

Das Entsorgungsgerät ist aufgebaut als mehrstufige, insbesondere dreistufige, Einheit, bestehend aus dem Brennstoffvorratsbereich, dem Schmelzbereich, beispielsweise als Tiegelofen mit üblichem gas- oder ölbetriebenen Brenner, dem Vorratsbereich als Zwischenlager der ausgebauten Asbestfaserprodukte und als Zwischenlager des vorrätig zu haltenden Flußmittels. Zwischen dem Schmelzbereich und dem Vorratsbereich kann ein Fördermittel angeordnet sein, das in entsprechender Dosierung eine kontinuierliche Förderung des Flußmittels und der zwischengelagerten Asbestfaserprodukte in den Schmelzbereich sicherstellt.

Durch die Reduzierung der Schmelztemperatur ergibt sich eine wesentliche Minimierung der einzusetzenden Energiekosten.

Es besteht weiterhin auch die Möglichkeit, ortsfest befestehende alte Hochofenanlagen, die bei einer Temperatur bis zu etwa 1400°C arbeiten, zu nutzen und einzusetzen.

Das Endprodukt des Schmelzaufschlußverfahrens besteht aus für die Umwelt ungefährlichen Oxiden, die insbesondere unter Beachtung des geringen Volumens über Deponien mit vergleichsweise geringem Kostenaufwand und auch wesentlich reduzierten Transportkosten entsorgt werden können.

Vorteilhafte Ausgestaltungen der Erfindung sind in den Unteransprüchen gekennzeichnet.

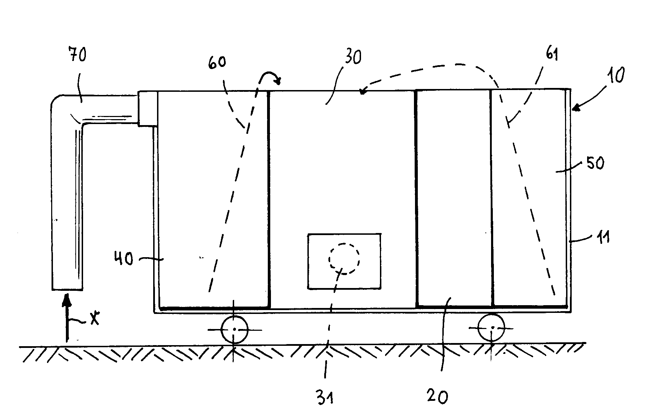

Ein Entsorgungsgerät zur Durchführung des erfindungsgemäßen Verfahrens ist beispielsweise schematisch in der Zeichnung dargestellt.

Dieses Entsorgungsgerät 10 besteht aus einem ortsfesten oder ortsveränderlichen Maschinenrahmen 11, in dem ein Brennstoffvorratsbehälter 20, ein Tiegelofen 30 mit einem gas- oder ölbetriebenen Brenner 31, ein Aufnahmebehälter 40 für die ausgebauten, asbestfaserhaltigen und zerkleinerten Produkte und ein Vorratsbehälter 50 für das Flußmittel angeordnet sind. Über einen Außenluftstaubsauger, der bei 70 dargestellt ist und der auch als selbständige Baueinheit zum Einsatz gelangen kann, wird das zerkleinerte, asbesthaltige Produkt in Pfeilrichtung X angesogen und direkt dem Aufnahmebehälter 40 für die asbestfaserhaltigen Produkte bzw. direkt dem Schmelzbereich, d.h. dem Innenraum des Tiegelofens, zugeführt, wobei auch in Form einer Zwischenlagerung die asbestfaserhaltigen Produkte vermittels eines Senkrechtförderers, z.B. Umlaufförderer oder Schneckenförderer, dem Tiegelofen zugeleitet werden können. Auch die Zuführung des Flußmittels aus dem Behälter 50 kann mittels eines Senkrechtförderers 61 in den Innenraum des Tiegelofens erfolgen. Des weiteren besteht die Möglichkeit, das Entsorgungsgerät 10 mit zusätzlichen Einrichtungen zu versehen, mit denen eine Vernetzung des entsorgten Asbestmaterials mit der angegebenen Salzlösung erfolgen kann. Das Entsorgungsgerät 10 ist dann mit Vorratsbehältern für die bei den Komponenten der Salzlösung versehen, wobei auch eine vorbereitete Salzlösung eingesetzt werden kann. Sind für die einzelnen Komponenten der Salzlösung gesonderte Vorratsbehälter vorgesehen, dann stehen diese mit einem Mischbehälter in Verbindung, dem vorgegebene Mengen der beiden Komponenten der Salzlösung zudosiert werden, um in Abhängigkeit von Menge und Art des Bindemittels im Spritzasbest die erforderliche Zusammensetzung der Salzlösung zu erhalten. Die so vorbereitete Salzlösung wird dann einem weiteren Behälter zugeführt, der das angefeuchtete oder durchfeuchtete asbestfaserhaltige Material enthält, welches diesem Mischbehälter zugeführt wird, wobei dem asbestfaserhaltigen Material die anhaftende Restfeuchte von der Zugabe der Salzlösung entzogen werden kann. Die Entfernung der Restfeuchte kann auch nach der Zugabe der Salzlösung vorgenommen werden. Die Mischung zwischen Salzlösung und entsorgtem Asbestmaterial erfolgt maschinell mittels geeigneter Mischeinrichtungen, wobei alle Arbeitsabläufe in dem Entsorgungsgerät über ein in der Zeichnung nicht dargestelltes Steuergerät steuerbar sind, so daß ein vollautomatischer Arbeitsablauf möglich ist.

## Patentansprüche

1. Verfahren zur Entsorgung von im Rahmen der Asbestsanierung von baulichen Anlagen aus diesen ausgebauten Produkten, wie Spritzasbest od.dgl., bei dem die Asbestfasern in Anwesenheit eines Flußmittels durch Schmelzen bei gleichzeitiger Überführung in ungefährliche Strukturen aufgeschlossen werden, dadurch gekennzeichnet, daß das nach einem Sanierungsprozeß mit Restfeuchte behaftete Asbestfasern enthaltende Material mit einer Salzlösung durchtränkt, mechanisch von überschüssiger Feuchte befreit und anschließend die Asbestfasern in Anwesenheit eines Flußmittels, wie Alkalisalze od.dgl., durch Schmelzen bei Temperaturen unterhalb von 1000° C aufgeschlossen werden.

2. Verfahren nach Anspruch 1, dadurch gekennzeichnet, daß schwachgebundenes Asbestmaterial, wie Spritzasbest, im Rahmen des Ausbaus in den baulichen Anlagen zur örtlichen Staub- und Faserbindung mit Wasser vernetzt oder durchtränkt wird, wobei gleichzeitig mit der Anfeuchtung des Materials dieses mechanisch oder über Sauganlagen von der jeweiligen Bauteiloberfläche abgetragen wird, und daß das mit Restfeuchte behaftete, Asbestfasern enthaltende Material mit einer Salzlösung durchtränkt, mechanisch von überschüssiger Feuchte befreit und anschließend dem thermischen Schmelzaufschluß zugeführt wird.

3. Verfahren nach einem der Ansprüche 1 und 2, dadurch gekennzeichnet, daß eine Salzlösung aus Soda und Borax verwendet wird.

4. Verfahren nach Anspruch 3, dadurch gekennzeichnet, daß eine Salzlösung mit einem Salzverhältnis von Soda/Borax von 1:3 bis 1:8 in einer Gesamtkonzentration von 15 bis 30 Gewichts-% verwendet wird.

5. Verfahren nach einem der Ansprüche 1 bis 4, dadurch gekennzeichnet, daß der Schmelzaufschluß der Asbestfasern in Tiegelöfen od.dgl. im Zusammenhang mit gas- oder ölbetriebenen Brennern erfolgt.

6. Verfahren nach einem der Ansprüche 1 bis 5, dadurch gekennzeichnet, daß die direkte Entsorgung der in den baulichen Anlagen ausgebauten asbestfaserhaltigen Produkte über Außenluftstaubsauger in einem geschlossenen Kreislauf einem Entsorgungsgerät zugeführt werden, das aus einer mehrstufigen Baueinheit mit einem Brennstoffvorratsbereich, dem Schmelzbereich in Form eines Tiegelofens od.dgl., einem Vorratsbereich als Zwischenlager der ausgebauten asbestfaserhaltigen Produkte und als Zwischenlager für das Flußmittel besteht.

7. Entsorgungsgerät für die Durchführung des Verfahrens nach Anspruch 1 bis 6, dadurch gekennzeichnet, daß das Entsorgungsgerät (10) aus einem ortsfesten oder ortsveränderlichen Maschinenrahmen (11) besteht, in dem ein Brennstoffvorratsbehälter (20), ein Tiegelofen (30) mit einem gas- oder ölbetriebenen Brenner (31), ein Aufnahmebehälter (40) für die ausgebauten asbestfaserhaltigen Produkte und ein Vorratsbehälter (50) für das Flußmittel angeordnet sind.

8. Entsorgungsgerät für die Durchführung des Verfahrens nach Anspruch 1 bis 6, dadurch gekennzeichnet, daß das Entsorgungsgerät (10) aus einem ortsfesten oder ortsveränderlichen Maschinenrahmen (11) besteht, in dem ein Brennstoffvorratsbehälter (20), ein Tiegelofen (30) mit einem gas- oder ölbetriebenen Brenner (31), ein Aufnahmebehälter (40) für die ausgebauten asbestfaserhaltigen Produkte, ein Vorratsbehälter (50) für das Flußmittel, Vorratsbehälter für die beiden Komponenten der Salzlösung, ein Behälter zum Mischen der zudosierten Komponenten der Salzlösung und eine Mischeinrichtung zum Benetzen des mit Restfeuchte behafteten, asbestfasernenthaltenden Materials mit der Salzlösung angeordnet sind.

9. Verwendung eines Schmelzaufschlusses in Anwesenheit eines Flußmittels, wie Alkalisalze od.dgl., bei Temperaturen unterhalb von 1000° C zur Überführung der Asbestfasern von nach einem Sanierungsprozeß mit Restfeuchte behafteten, asbestfasernenthaltenden, mit einer Salzlösung aus Soda und Borax in einem Salzverhältnis von Soda/Borax von 1:3 bis 1:8 in einer Gesamtkonzentration von 15 bis 30 Gewichts-% durchtränktem und von überschüssiger Feuchte befreitem Material in ungefährliche Metalloxide zwecks Entsorgung von im Rahmen der Asbestsanierung von baulichen Anlagen aus diesen ausgebauten Produkten, wie Spritzasbest od.dgl..

## Claims

1. Process for the disposal during asbestos decontamination of of buildings of asbestos fibre containing products removes therefrom, such as sprayed asbestos, etc., in which the asbestos fibres, in the presence of a fluxing agent, are broken down by melting while simultaneously being converted into innocuous structures,
**characterized in that**
the material which, subsequent to a decontamination process, comprising asbestos fibres containing residual moisture is aturated with a saline solution, mechanically freed from excess moisture and, following this, the asbestos fibres, in the presence of a fluxing agent, such as alkali salts or suchlike, are broken down by being melted at temperatures below 1000°C.

2. Process according to Claim 1,
**characterized in that**
poorly bonded asbestos metarial, such as sprayed asbestos, in the course of the removal from the buildings, in order to locally bind dust and fibres, is moistened or soaked with water, while simultaneously with the moistening of the material the same is removed mechanically or by means of extraction equipment from the respective building part area, and in that the material containing residual moisture and asbestos fibres is saturated with a saline solution, mechanically freed from excess moisture and subsequently supplied to the thermal melting decomposition.

3. Process according to either Claim 1 or 2,
**characterized in that**
a saline solution of soda and borax is employed.

4. Process according to Claim 3,
**characterized in that**
a saline solution having a salt ratio of soda/borax of 1:3 to 1:8 in a total concentration of 15 to 30 per cent by weight is employed.

5. Process according to any of Claims 1 to 4,
**characterized in that**
the melting decomposition of the asbestos fibres is performed in crucible furnaces or suchlike in connection with gas or oil-operated burners.

6. Process according to any of Claims 1 to 5,
**characterized in that**
the direct disposal of the asbestos containing products removed from the buildings is effected in that the same are, with the aid of external air dust exhausters, supplied in a closed circuit to a disposal apparatus which comprises a multi-stage structural unit with a fuel supply unit, the melting area in the orm of a crucible furnace or suchlike, a supply area as an intermediate storage area for the removed asbestos products and an intermediate storage area for the fluxing agent.

7. Disposal apparatus for performing the process according to Claims 1 to 6,
**characterized in that**
the disposal apparatus (10) is comprised of a stationary or movable engine frame (11), in which a fuel supply tank (20), a crucible furnace (30) with a gas or oil-operated burner (31), a receiving container (40) for the removed asbestos fiber containing products and a supply container (50) for the fluxing agent are disposed.

8. Disposal apparatus for performing the process according to Claims 1 to 6,
**characterized in that**
the disposal apparatus (10) is comprised of a stationary or movable engine frame (11), in which are disposed a fuel supply tank (20), a crucible furnace (30) with a gas or oil-operated burner (31), a receiving container (40) for the removed asbestos fibre containing products, a supply container (50) for the fluxing agent, a supply container for the two components of the saline solution and a mixing means for moistening with the saline solution the asbestos fiber containing material possessing a residual moisture.

9. The use of a melting decomposition in the presence of a fluxing agent, such as alkali salts or suchlike, at temperatures below 1000°C for the conversion of the asbestos fibres of an asbestos fibre containing material which, subsequent to a decontamination process, contains residual moisture, is saturated with a saline solution of soda and borax at a salt ratio of soda/borax of 1:3 to 1:8 in a total concentration of 15 to 30 per cent by weight and freed from excessive moisture, into innocuous metal oxides for the purpose of the disposal of products removed from the building in the course of the asbestos decontamination of the same, such as sprayed asbestos or suchlike.

## Revendications

1. Procédé pour l'évacuation, dans le cadre de la décontamination de l'amiante des constructions, des produits démontés de ces constructions, comme de l'amiante projeté ou équivalent, dans lequel les fibres d'amiante sont dissoutes, en présence d'un fondant, par fusion tout en étant transformées simultanément en structures non dangereuses, **caractérisé en ce** que le matériau qui contient des fibres d'amiante dotées d'humidité résiduelle après un processus de décontamination est imprégné d'une solution saline, est libéré mécaniquement d'humidité excédentaire et que les fibres d'amiante sont ensuite dissoutes en présence d'un fondant, comme des sels alcalins ou équivalent, par fusion à des températures au-dessous de 1000° C.

2. Procédé selon la revendication 1, **caractérisé en ce** que du matériau d'amiante faiblement lié, comme de l'amiante projeté, est humidifié ou imprégné d'eau dans le cadre du démontage dans des constructions pour la liaison locale de poussière et de fibres, le matériau étant simultanément humidifié et enlevé mécaniquement ou par des installations d'aspiration de la surface de l'élément de construction respectif, et que le matériau qui contient des fibres d'amiante dotées d'humidité résiduelle est imprégné d'une solution saline, est libéré mécaniquement d'humidité excédentaire et est ensuite dissous par fusion thermique.

3. Procédé selon l'une des revendications 1 et 2, **caractérisé en ce** qu'une solution saline à base de soude et de borax est utilisée.

4. Procédé selon la revendication 3, **caractérisé en ce** qu'une solution saline avec un rapport de sel du soude/borax de 1/3 à 1/8 est utilisée dans une concentration totale de 15 à 30 % en poids.

5. Procédé selon l'une des revendications 1 à 4**, caractérisé en ce** que la dissolution par fusion des fibres d'amiante se fait dans des creusets ou équivalent en relation avec des brûleurs à gaz ou à mazout.

6. Procédé selon l'une des revendications 1 à 5, **caractérisé en ce** que l'évacuation directe des produits contenant des fibres d'amiante démontés dans les constructions se fait en les amenant par des aspirateurs d'air extérieur dans un circuit fermé à un appareil d'évacuation qui se compose d'une unité de construction à plusieurs étages avec une zone de stockage de combustibles, la zone de fusion en forme de creuset ou équivalent, une zone de stockage comme entrepôt intermédiaire des produits contenant des fibres d'amiante démontés et comme entrepôt intermédiaire pour le fondant.

7. Appareil d'évacuation pour la réalisation du procédé selon les revendications 1 à 6, **caractérisé en ce** que l'appareil d'évacuation (10) est constitué par un bâti de machine stationnaire ou mobile (11) dans lequel sont placés un réservoir de stockage de combustibles (20), un creuset (30) avec un brûleur à gaz ou à mazout (31), un réservoir de logement (40) pour les produits contenant de l'amiante démontés et un réservoir de stockage (50) pour le fondant.

8. Appareil d'évacuation pour la réalisation du procédé selon les revendications 1 à 6, **caractérisé en ce** que l'appareil d'évacuation (10) est constitué par un bâti de machine stationnaire ou mobile (11) dans lequel sont placés un réservoir de combustibles (20), un creuset (30) avec un brûleur à gaz ou à mazout (31), un réservoir de logement (40) pour les produits contenant de l'amiante démontés, un réservoir de stockage (50) pour le fondant, des réservoirs de stockage pour les deux composants de la solution saine, un réservoir pour mélanger les composants du dosage de la solution saline et un dispositif de mélange pour humidifier avec la solution saine le matériau qui contient des fibres d'amiante, doté humidité résiduelle.

9. Utilisation d'une dissolution par fusion en présence d'un fondant, comme des sels alcalins ou équivalent, à des températures au-dessous de 1000° C pour transformer les fibres d'amiante d'un matériau doté d'humidité après un processus de décontamination, contenant des fibres d'amiante, imprégné d'une solution saline de soude et de borax dans un rapport de sel de soude/borax de 1/3 à 1/8 dans une concentration totale de 15 à 30 % en poids et libéré d'humidité résiduelle en oxydes métalliques pour l'évacuation de produits démontés de constructions dans le cadre de la décontamination de l'amiante, comme l'amiante projeté ou équivalent.
